# EUROPÄISCHE PATENTANMELDUNG

(11) **EP 2 363 224 A2**
(43) Veröffentlichungstag der Anmeldung: **07.09.2011**
(21) Anmeldenummer: 10193992.4
(22) Anmeldetag: 07.12.2010
(51) Int. Cl.: B23B 31/16, B23B 31/28, B23Q 17/00

(54) **Spanneinrichtung für Werkzeugmaschinen**

(30) Priorität: 02.03.2010 EP 10155188
(71) Anmelder: Hiestand, Karl, 88630 Pfullendorf (DE)
(72) Erfinder: Hiestand, Karl, 88630 Pfullendorf (DE)
(74) Vertreter: Engelhardt & Engelhardt

(57) **Zusammenfassung**

Bei einer Spanneinrichtung (1) für Werkzeugmaschinen (2), die mit einem Kraftspannfutter (3) versehen und dessen Spannbacken (4) über eine axial verstellbare Zugstange (6) betätigbar sind und die einen Servomotor (11) sowie einen Bewegungswandler (21) aufweist, mittels dem die Verstellbewegungen der Rotorwelle (14) des Servomotors (11) in axiale Verstellbewegungen der Zugstange (6) umsetzbar sind, ist der Bewegungswandler (21) in einem geschlossenen Gehäuse (22) eingesetzt, das mit dem Spannfutter (3) verbunden ist. Außerdem ist das Gehäuse (22) in einer dieses umgebenden Glocke (31) angeordnet, die drehfest befestigt ist, und zwischen dem Servomotor (11) und dem Bewegungswandier (21) ist ein zweistufiges Planetenradgetriebe (41) vorgesehen, dessen Eingangsglied (43) mit dem Servomotor (11) und dessen Ausgangsglied (46) an den Bewegungswandler (21) angeschlossen sind. Des Weiteren sind die Planetenräder (47) der zweiten Stufe (II) des Planetenradgetriebes (41) an der Glocke (31) drehfest abgestützt.

Durch diese Ausgestaltung wird erreicht, dass diese nicht nur kompakt, baut sondern dass bei Arbeitsvorgängen nur ein geringer Energieaufwand erforderlich ist. Der Rotor (14) des Servomotors (11) wird nämlich ausschließlich beim Einspannen und beim Lösen eines Werkstückes (10) durch den Stator (12) angetrieben. Bei der Bearbeitung eines Werkstückes (10) ist dagegen der Rotor (13) stillgesetzt und durch diesen wird lediglich die Spannkraft aufrechterhalten, so dass die Stromaufnahme des Servomotors (11) beim Bearbeiten eines Werkstückes (10) gering ist. Auch die Betriebsgeräusche der Spanneinrichtung (1) können auf dieses Weise niedrig gehalten werden.

## Beschreibung

Die Erfindung bezieht sich auf eine Spanneinrichtung für Werkzeugmaschinen, die mit einem Kraftspannfutter zur Halterung eines Werkstückes versehen und dessen Spannbacken mittels der Spanneinrichtung über eine axial verstellbare Zugstange betätigbar sind, wobei die Spanneinrichtung einen umschaltbaren elektrischen Servomotor sowie einen Bewegungswandler aufweist, mittels dem die Verstellbewegungen der Rotorwelle des Servomotors in die zur Verstellung der Spannbacken erforderlichen axialen Verstellbewegungen der Zugstange umsetzbar sind.

Eine Spanneinrichtung dieser Art ist durch die EP 0234230 B1 (Fig. 3) bekannt. Bei dieser Spanneinrichtung, bei der die Rotationsbewegungen des Rotors mittels eines Schraubtriebes als Bewegungswandler in axiale Verstellbewegungen umgewandelt werden, werden der Rotor und der Stator des Servomotors während eines Bearbeitungsvorganges von der Maschinenspindel der Werkzeugmaschine mit deren Drehzahl ständig angetrieben und laufen mit dieser synchron um. Die Wicklung des Servomotors wird dadurch in einem starken Maße belastet. Vor allem aber ist hierbei von Nachteil, dass bei einem Spannvorgang die erheblichen Massen der an der Kraftübertragung beteiligten Bauteile jeweils beschleunigt bzw. abgebremst werden müssen, somit hohe Zentrifugatkräfte auftreten und insbesondere die zur Kraftübertragung vorgesehen Riementriebe sehr stark belastet sind. Eine lange Lebensdauer dieser bekannten Spanneinrichtung ist demnach nicht gewährleistet, auch verursachen die ständig umlaufenden Bauteile, insbesondere die Riementriebe, sehr hohe Betriebsgeräusche.

Des Weiteren ist von Nachteil, dass der Energieverbrauch, da der Servomotor ständig eingeschaltet ist, erheblich ist und dass die Energiezufuhr über Schleifkontakte, die einem hohen Verschleiß unterliegen, erfolgen muss. Eine zufriedenstellende Betriebesweise ist somit bei dieser Spanneinrichtung, die außerdem groß und ausladend baut, nicht zu bewerkstelligen.

Aufgabe der Erfindung ist es daher, eine Spanneinrichtung für Werkzeugmaschinen der vorgenannten Gattung zu schaffen, die nicht nur kompakt zu gestalten ist, sondern die vor allem bei Arbeitsvorgängen einen geringen Energieaufwand erfordert und somit wirtschaftlich einsetzbar ist. Der Rotor des Servomotors soll nämlich ausschließlich beim Einspannen und beim Lösen eines Werkstückes durch den Stator angetrieben werden. Bei der Bearbeitung eines eingespannten Werkstückes soll dagegen der Rotor stillgesetzt sein, und durch diesen soll lediglich die Spannkraft aufrechterhalten werden, so dass die Stromaufnahme des Servomotors beim Bearbeiten eines Werkstückes gering ist. Des Weiteren sollen, da bei Arbeitsvorgängen nur wenige Bauteile der Spanneinrichtung mit umlaufen, die Betriebsgeräusche gering gehalten werden. Eine lange störungsfreie Lebensdauer bei stets hoher Betriebssicherheit soll somit gegeben sein.

Gemäß der Erfindung wird dies bei einer Spanneinrichtung für Werkzeugmaschinen der vorgenannten Art dadurch erreicht, dass der Bewegungswandler der Spanneinrichtung in einem geschlossenen Gehäuse eingesetzt ist, das mit dem Spannfutter verbunden ist, dass das Gehäuse in einer dieses umgebenden Glocke angeordnet ist, die vzw. an der Werkzeugmaschine befestigt ist, dass zwischen dem Servomotor und dem Bewegungswartdler ein zweistufiges Planetenradgetriebe vorgesehen ist, dessen Eingangsglied mit dem Servomotor und dessen Ausgangsglied unmittelbar oder über mindestens ein Untersetzungsgetriebe an dem Bewegungswandler angeschlossen ist und dass die Planetenräder der zweiten Stufe des Planetenradgetriebes an der Glocke drehfest abgestützt sind.

Zur Abstützung der Planetenräder der zweiten Stufe des Planetenradgetriebes ist es angezeigt, an der Innenmantelfläche der Glocke als Hohlrad rundum eine Verzahnung unmittelbar einzuarbeiten oder einen Zahnkranz in die Glocke einzusetzen oder an dieser zu befestigen, wobei das Planetenradgetriebe auf der dem Bewegungswandler abgewandten Seite in der Glocke angeordnet und die Glocke auf der dem Bewegungswandler abgewandten Seite durch einen Abschlussdeckel verschlossen sein sollte, in dem das Eingangsglied der ersten Stufe des Planetenradgetriebes drehbar gelagert ist. Angebracht ist es auch, die Glocke an einem Bauteil der Werkzeugmaschine unmittelbar anzugießen oder an dieser fest anzuschrauben.

Das den Bewegungswandler aufnehmende Gehäuse sollte im Querschnitt Z-förmig ausgebildet sein und einen in Richtung des Abschlussdeckels der Glocke abstehenden Ansatz aufweisen. Der Ansatz des Gehäuses sollte drehbar in dem Eingangsglied der ersten Stufe des Planetenradgetriebes und/oder einem Antriebsglied gelagert sein.

Vorteilhaft ist es des Weiteren, die erste und die zweite Stufe des Planetenradgetriebes auf dem Ansatz des Gehäuses abzustützen, in dem das Sonnenrad der ersten Stufe des Planetenradgetriebes drehfest auf dem Ansatz des Gehäuses gelagert sein sollte und die beiden Stufen des Planetenradgetriebes über einen als Scheibe ausgebildeten mit in den Planetenrädern drehbar gelagerten Bolzen versehenen Planetenträger miteinander verbunden sind, und der Planetenträger drehbar auf dem Ansatz des Gehäuses gehalten ist.

Das Eingangsglied der ersten Stufe des Planetenradgetriebes sollte ferner als Hohlrad ausgebildet sein, das drehbar auf dem Ansatz des Gehäuses gelagert und mit dem Servomotor trieblich verbunden ist. Außerdem sollten die die beiden Stufen des Planetenradgetriebes bildenden kongruenten Zahnräder jeweils die gleichen Zähnezahlen aufweisen.

Nach einer Weiterbildung ist vorgesehen, das dem Bewegungswandler vorgeschaltete Untersetzungsgetriebe in dem dieses aufnehmenden Gehäuses vzw. in dessen Zwischenwand anzuordnen, wobei das Untersetzungsgetriebe aus einem einerseits das Sonnenrad der zweiten Stufe des Planetenradgetriebes bildenden Doppelzahnrad, einem mit diesem andererseits kämmenden Zwischenrad und einem in dem Gehäuse drehbar gelagerten Zahnrad bestehen kann, das mit dem Bewegungswandler in Triebverbindung steht und fest mit dem Zwischenrad verbunden ist.

Wird eine Spanneinrichtung für Werkzeugmaschinen gemäß der Erfindung ausgebildet, so ist stets die Gewähr gegeben, dass ein zu bearbeitendes Werkstück in kurzer Zeit in einem Kraftspannfutter einzuspannen ist und dass die vorgegebene Spannkraft während eines Arbeitsvorganges gehalten oder an die jeweiligen Verhältnisse ohne Schwierigkeiten angepasst werden kann. Dabei ist von besonderem Vorteil, dass zum Einspannen und Entspannen des Werkstückes lediglich der Rotor des Servomotors und die mit diesem verbundene Bauteile der Spanneinrichtung kurzzeitig anzutreiben sind. Zur Aufrechterhaltung der auf das Werkstück über die Spannbacken einwirkende Kraft muss in dem Servomotor dazu lediglich ein Stillstands-Drehmoment, das in Abhängigkeit von dem jeweiligen Werkstück und/oder der Bearbeitung zu wählen ist und eingestellt werden kann, anstehen. Somit laufen bei einem Arbeitsvorgang nur wenige Bauteile der Spanneinrichtung um, so dass die Betriebsgeräusche niedrig gehalten werden. Vor allem aber ist der Energieverbrauch des Servomotors während der Bearbeitung eines Werkstückes zur Aufrechterhaltung der Spannkraft, zumal dieser auch abgeschaltet und die Spanneinrichtung mittels einer Sicherheitseinrichtung blockiert werden kann, gegenüber bekannter Einrichtungen äußerst gering, die Betriebskosten können somit in einem erheblichen Maße gesenkt werden.

Des Weiteren ist eine kompakte Bauweise der vorschlagsgemäß ausgebildeten Spanneinrichtung, die als Vollspanner oder auch als Hohlspanner gestaltet und somit vielseitig einsetzbar ist, gegeben. Des Weiteren sind die Bauteile der Spanneinrichtung problemlos und wirtschaftlich herzustellen, eine hohe Funktionsfähigkeit über einen langen Zeitraum ist somit bei wirtschaftlichem Einsatz und geringen Verschleiß gegeben. Als dem Servomotor als Antriebsmotor zugeordnete Getriebe können verständlicherweise auch andersartige Getriebekonstruktionen, wie z.B. Spannungswellengetriebe, gewählt werden.

In der Zeichnung ist ein Ausführungsbeispiel der gemäß der Erfindung ausgebildeten Spanneinrichtung für Werkzeugmaschinen dargestellt, das nachfolgend im Einzelnen erläutert sind. Hierbei zeigen, jeweils in einem Axialschnitt:
- Figur 1: die Spanneinrichtung, eingebaut in eine Werkzeugmaschine, und
- Figur 2: einen Ausschnitt aus Figur 1 in einer vergrößerten Wiedergabe mit eingezeichnetem Kraftfluss bei einem Spannvorgang.

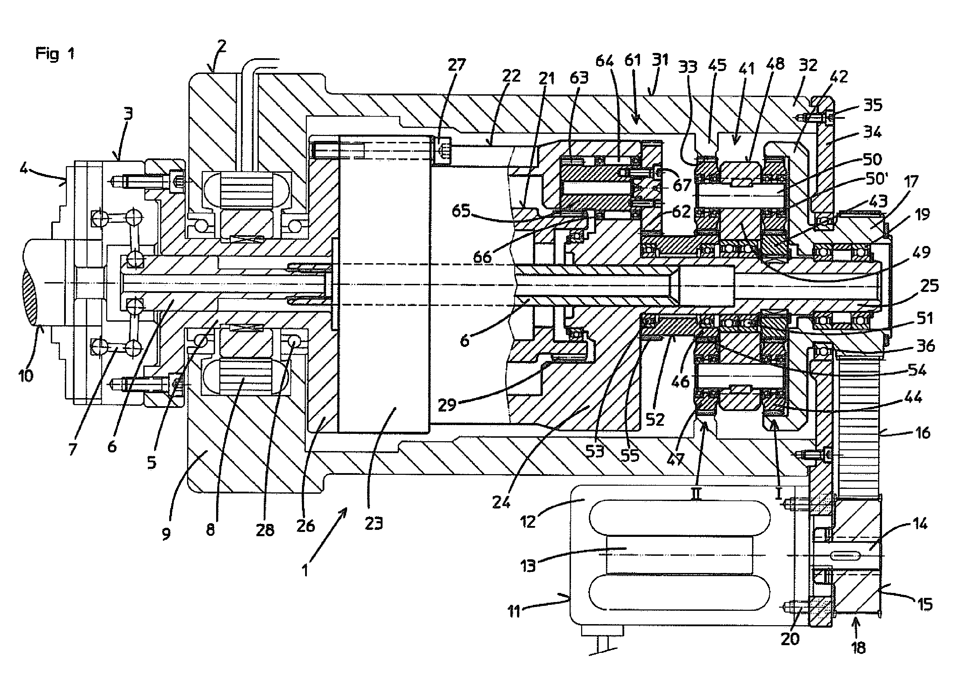

Die in Figur 1 dargestellt und mit 1 bezeichnete Spanneinrichtung dient zur Betätigung eines auf einer Werkzeugmaschine 2 angeordneten Kraftspannfutters 3, mittels dessen radial verstellbarer Spannbacken 4 ein zu bearbeitendes Werkstück 10 in dem Kraftspannfutter 3 einspannbar ist. Die Spannbacken 4 des Kraftspannfutters 2 sind hierbei über Umlenkhebel 7 durch eine axial verstellbare Zugstange 6 betätigbar, die die Maschinenspindel 5 durchgreift und mit einem umschaltbaren elektrischen Servomotor 11 als Antriebsmotor über einen Bewegungswandler 21 in Triebverbindung steht. Mittels des Bewegungswandlers 21 werden rotorische Verstellbewegungen des Servomotors 11 in axiale Verstellungsbewegungen der Zugstange 6 umgewandelt.

Der Servomotor 11 besteht aus einem Stator 12 und einem Rotor 13, dessen Rotorwelle 14 über einen aus einer Abtriebscheibe 15, einem Treibriemen 16 und einer Antriebsscheibe 17 bestehenden Riementrieb 18 mit einem Planetenradgetriebe 41 trieblich verbunden ist, das über ein oder mehrere Untersetzungsgetriebe 61 mit dem Bewegungswandler 21 in Triebverbindung steht. Statt des Riementriebes 18 können zwischen dem Servomotor 11 und dem Planetenradgetriebe 41 auch ein oder mehrere Zahnräder vorgesehen werden.

Der Bewegungswandler ist in einem Gehäuse 22 eingebaut, das im Querschnitt Z-förmig ausgebildet ist. In dem als Hohlkörper gestalteten Gehäusemantel 23 ist hierbei der Bewegungswandler 21 eingesetzt, in einer sich an diesen anschließenden Zwischenwand 24 ist das Untersetzungsgetriebe 61 untergebracht. Des Weiteren ist auf einem an der Zwischenwand 24 angearbeiteten Ansatz 25 das Planetenradgetriebe 41 angeordnet.

Der Bewegungswandler 21 mit dem Untersetzungsgetriebe 61 und das Planetenradgetriebe 41 sind in einer ebenfalls als Hohlkörper 32 ausgebildeten Glocke 31 eingesetzt, die bei dem gezeigten Ausführungsbeispiel unmittelbar an einem Bauteil 9 der Werkzeugmaschine 2 angegossen ist. Am gegenüberliegenden Ende ist die Glocke 31 durch einen Abschlussdeckel 34 verschlossen, der mittels Schrauben 35 an dem Hohlkörper 32 der Glocke 31 befestigt ist. Außerdem ist mittels Schrauben 20 der Servomotor 11 an dem Abschlussdeckel 34 gehalten.

Auf dem axial abstehenden Ansatz 25 der Glocke 31 ist mittels Lager 19 die Antriebsscheibe 17 des Riementriebes 18, die auch mittels Lager 36 in dem Abschlussdeckel abgestützt ist, drehbar gelagert. Außerdem ist auf dem Ansatz 25 das aus zwei Stufen I und II zusammengesetzte Planetenradgetriebe 41 abgestützt. Das als Hohlrad 42 ausgebildete Eingangsglied der ersten Stufe I des Planetenradgetriebes 41 ist hierbei fest mit der Antriebsscheibe 17 verbunden, das Sonnenrad 43 der Stufe I ist dagegen fest auf dem Ansatz 25 angebracht. Das Hohlrad 45 der Stufe IIist durch einen Zahnkranz 33 gebildet, der ortsfest an der Glocke 31 angearbeitet ist, deren Sonnenrad 46 ist Teil eines Doppelzahnrades 52, das mittels Lager 53 ebenfalls drehbar auf dem Ansatz 25 gelagert ist. Über einen als Scheibe 49 ausgebildeten Planetenträger 48, in den Bolzen 50 drehfest eingesetzt sind, auf denen die Planetenräder 43 der ersten Stufe I und die Planetenräder 47 der zweiten Stufe II mittels Wälzlager 50' angeordnet sind, sind die beiden Stufen I und II miteinander verbunden. Der Planetenträger 48 ist über Wälzlager 51 ebenfalls auf dem Ansatz 25 drehbar angeordnet.

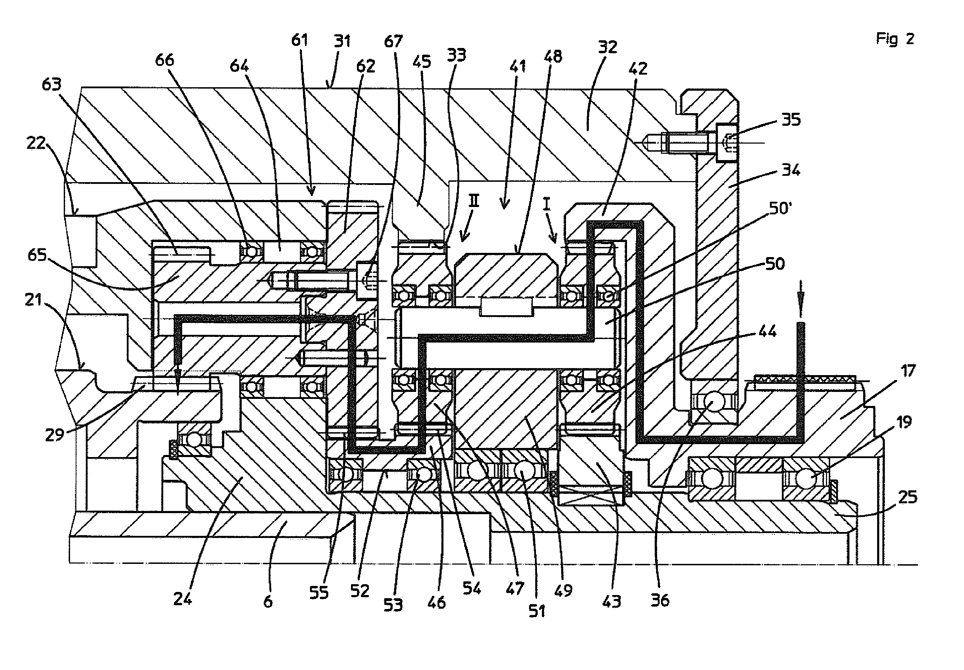

Das Doppelzahnrad 52, das mit der Verzahnung 54 in die Planetenräder 47 der zweiten Stufe II eingreift, bildet somit das Ausgangsglied des Planetenradgetriebes 51 und das Verbindungsglied mit dem Untersetzungsgetriebe 61. Die zweite an dem Doppelzahnrad 52 angearbeitete Verzahnung 55 greift nämlich in ein Zwischenrad 62 ein, das mittels Schrauben 67 an einer Welle 65 befestigt ist, an der eine Verzahnung 63 angebracht ist, die wiederum in eine an dem Bewegungswandler 21 vorgesehene Verzahnung 29 eingreift. Die Welle 65 ist bei der gezeigten Ausgestaltung mittels Wälzlager 66 in einer in die Zwischenwand 24 eingearbeitete Ausnehmung 64 drehbar abgestützt. Der Bewegungswandler 21 steht auf diese Weise über das Untersetzungsgetriebe 61, das Planetenradgetriebe 41 sowie den Riementrieb 18 mit dem Servomotor 11, wie dies in Figur 2 durch die verstärkt eingezeichnete Linie gekennzeichnet ist, in Triebverbindung.

Da die Glocke 31 fest mit dem Bauteil 9 der Werkzeugmaschine 2 verbunden ist, stehen diese wie auch der an dieser angeschraubte Abschlussdeckel 34 stets still. Das Gehäuse 22 des Bewegungswandlers 21 ist dagegen mittels Schrauben 27 an einem Flansch 26 angeschraubt, der einen Teil der Maschinenspindel 5 bildet und im Betrieb umläuft und mittels Lager 28 in der Werkzeugmaschine 2 drehbar gelagert ist. Durch einen Elektromotor 8 wird die Maschinenspindel 5 zusammen mit dem Kraftspannfutter 3 angetrieben. Bei Arbeitsvorgängen wird somit das den Bewegungswandler 31 aufnehmende Gehäuse 22 mit der Drehzahl angetrieben, mit der auch das Kraftspannfutter 3 umläuft.

Bei Arbeitsvorgängen wirkt die Antriebsdrehzahl der Maschinenspindel 5 nicht auf den Servomotor 11 ein. In diesen Betriebszuständen wird vielmehr die Drehzahl der Maschinenspindel 5, da die kongruenten Zahnräder der Stufen I und II des Planetenradgetriebes 41 die gleichen Zähnezahlen aufweisen, unwirksam und gewissermaßen eliminiert. Das Hohlrad 42 der ersten Stufe I ist dadurch nicht angetrieben, so dass auf die Rotorwelle 14 des Servomotors 11 und somit auf dessen Rotor 13 keine Drehbewegungen einwirken.

Um das Werkstück 10 in dem Kraftspannfutter 3 einzuspannen, ist dem Servomotor 11 über eine Stromleitung und ein Steuergerät elektrische Energie gesteuert zuzuführen. Dadurch werden der Rotor 13 und das mit dessen Rotorwelle 14 über den Riementrieb 18 gekoppelte Hohlrad 43 der ersten Antriebsstufe I des Planetenradgetriebes 41 angetrieben. Da das Sonnenrad 46 auf dem Ansatz 25 des Gehäuses 22 ortsfest abgestützt ist, werden die Planetenräder 43 und mit diesen über den Planetenträger 48 auch die Planetenräder 47 der zweiten Stufe II angetrieben. Diese stützen sich jedoch in dem an der Glocke 31 ortsfest befestigten Zahnkranz 33 als Hohlrad 45 ab, so dass das Doppelzahnrad 52 mit umläuft und die eingeleitete Energie über das wählbar auszulegende Untersetzungsgetriebe 61 dem Bewegungswandler 21 zugeführt wird.

Bei Arbeitsvorgängen ist nicht nur der ortsfest abgestützte Stator 12 des Servomotors 11 stillgesetzt, sondern auch dessen Rotor 13. Zur Aufrechterhaltung der Spannkraft der Spannbacken 4 auf das Werkstück 10 ist lediglich ein den jeweiligen Vorgaben angepasstes Stillstands-Drehmoment aufrecht zu erhalten. Der Energieverbrauch bei Arbeitsvorgängen ist demnach äußerst gering.

Bei der Spanneinrichtung 1 ist der Servomotor 11 achsparallel zu deren Längsachse angeordnet. Selbstverständlich ist es aber auch möglich, diesen koaxial oder winkelig zur Längsachse anzubauen. Auch kann die Spanneinrichtung 1 als Voll- oder Hohlspanner ausgebildet werden.

## Patentansprüche

1. Spanneinrichtung (1) für Werkzeugmaschinen (2), die mit einem Kraftspannfutter (3) zur Halterung eines Werkstückes (10) versehen und dessen Spannbacken (4) mittels der Spanneinrichtung (1) über eine axial verstellbare Zugstange (6) betätigbar sind, wobei die Spanneinrichtung (1) einen umschaltbaren elektrischen Servomotor (11) sowie einen Bewegungswandler (21) aufweist, mittels dem die Verstellbewegungen der Rotorwelle (14) des Servomotors (11) in die zur Verstellung der Spannbacken (4) erforderlichen axialen Verstellbewegungen der Zugstange (6) umsetzbar sind,
**dadurch gekennzeichnet,**
**dass** der Bewegungswandler (21) der Spanneinrichtung (1) in einem geschlossenen Gehäuse (22) eingesetzt ist, das mit dem Spannfutter (3) verbunden ist, dass das Gehäuse (22) in einer dieses umgebenden Glocke (31) angeordnet ist, die vzw. an der Werkzeugmaschine (2) drehfest befestigt ist, dass zwischen dem Servomotor und dem Bewegungswandler (21) ein zweistufiges Planetenradgetriebe (41) vorgesehen ist, dessen Eingangsglied (43) mit dem Servomotor (11) und dessen Ausgangsglied (Sonnenrad 46) unmittelbar oder über mindestens ein Untersetzungsgetriebe (61) an den Bewegungswandler (21) angeschlossen ist, und dass die Planetenräder (47) der zweiten Stufe (II) des Planetenradgetriebes (41) an der Glocke (31) drehfest abgestützt sind.

2. Spanneinrichtung nach Anspruch 1,
**dadurch gekennzeichnet,**
**dass** zur Abstützung der Planetenräder (47) der zweiten Stufe (II) des Planetenradgetriebes (41) an der Innenmantelfläche der Glocke (31) als Hohlrad (45) rundum eine Verzahnung (33) unmittelbar eingearbeitet oder ein Zahnkranz in die Glocke (31) eingesetzt oder an dieser befestigt ist.

3. Spanneinrichtung nach Anspruch 1 oder 2,
**dadurch gekennzeichnet,**
**dass** das Planetenradgetriebe (41 auf der dem Bewegungswandler (21) abgewandten Seite in die Glocke (31) eingesetzt ist.

4. Spanneinrichtung nach einem oder mehreren der Ansprüche 1 bis 3,
**dadurch gekennzeichnet,**
**dass** die Glocke (31) auf der dem Bewegungswandler (21) abgewandten Seite durch einen Abschlussdeckel (35) verschlossen ist, in dem das Eingangsglied (43) der ersten Stufe (I) des Planetenradgetriebes (41) drehbar gelagert ist.

5. Spanneinrichtung nach einem oder mehreren der Ansprüche 1 bis 4,
**dadurch gekennzeichnet,**
**dass** die Glocke (31) an einem Bauteil der Maschinenspindel (2) unmittelbar angegossen oder an diesem fest angeschraubt ist.

6. Spanneinrichtung nach einem oder mehreren der Ansprüche 1 bis 5,
**dadurch gekennzeichnet,**
**dass** das den Bewegungswandler (21) aufnehmende Gehäuse (22) im Querschnitt Z-förmig ausgebildet ist und einen in Richtung des Abschlussdeckels (34) der Glocke (31) abstehenden Ansatz (25) aufweist.

7. Spanneinrichtung nach einem oder mehreren der Ansprüche 1 bis 6,
**dadurch gekennzeichnet,**
**dass** der Ansatz (25) des Gehäuses (22) drehbar in dem Eingangsglied (43) der ersten Stufe (I) des Planetenradgetriebes (41) und/oder einem Antriebsglied (17) gelagert ist.

8. Spanneinrichtung nach Anspruch 6 oder 7,
**dadurch gekennzeichnet,**
**dass** die erste und zweite Stufe (I, II) des Planetenradgetriebes (41) auf dem Ansatz (25) des Gehäuses (22) abgestützt sind.

9. Spanneinrichtung nach Anspruch 8,
**dadurch gekennzeichnet,**
**dass** das Sonnenrad (44) der ersten Stufe (I) des Planetenradgetriebes (41) drehfest auf dem Ansatz (25) des Gehäuses (22) abgestützt ist.

10. Spanneinrichtung nach Anspruch 8 oder 9,
**dadurch gekennzeichnet,**
**dass** die beiden Stufen (I, II) des Planetenradgetriebes (41) über einen als Scheibe (49) ausgebildeten Planetenträger (48) miteinander verbunden sind und dass der Planetenträger (48) drehbar auf dem Ansatz (25) des Gehäuses (22) gelagert ist.

11. Spanneinrichtung nach einem oder mehreren der Ansprüche 8 bis 10,
**dadurch gekennzeichnet,**
**dass** das Eingangsglied (43) der ersten Stufe (I) des Planetenradgetriebes (41) als Hohlrad (43) ausgebildet ist, das drehbar auf dem Ansatz (25) des Gehäuses (22) gelagert und mit dem Servomotor (11) trieblich verbunden ist.

12. Spanneinrichtung nach einem oder mehreren der Ansprüche 8 bis 11,
**dadurch gekennzeichnet,**
**dass** die die beiden Stufen (I, II) des Planetenradgetriebes (41) bildenden kongruenten Zahnräder (43, 44, 45 bzw. 45, 46, 47) jeweils die gleichen Zähnezahlen aufweisen.

13. Spanneinrichtung nach einem oder mehreren der Ansprüche 11 bis 12,
**dadurch gekennzeichnet,**
**dass** das dem Bewegungswandler (21) vorgeschaltete Untersetzungsgetriebe (61) in dem diesen aufnehmenden Gehäuses (22), vzw. in dessen Zwischenwand (24), angeordnet ist.

14. Spanneinrichtung nach Anspruch 13,
**dadurch gekennzeichnet,**
**dass** das Untersetzungsgetriebe (61) aus einem einerseits das Sonnenrad (46) der zweiten Stufe (II) des Planetenradgetriebes (41) bildenden Doppelzahnrad (52), einem mit diesem andererseits kämmenden Zwischenrad (62) und einem in dem Gehäuse (22) drehbar gelagerten Zahnrad (63) gebildet ist, das mit dem Bewegungswandler (21) in Triebverbindung steht und fest mit dem Zwischenrad (62) verbunden ist.
